# EUROPEAN PATENT SPECIFICATION

(11) **EP 1 577 450 B1**
(45) Date of publication and mention of the grant of the patent: **23.01.2008**
(21) Application number: 05004786.9
(22) Date of filing: 04.03.2005
(51) Int. Cl.: E03C 1/298, F16K 15/14

(54) **Odour trap**
Geruchsverschluß
Piège à odeur

(30) Priority: 15.03.2004 SE 0400630
(43) Date of publication of application: 21.09.2005
(73) Proprietor: AB SJÖBO BRUK, S-275 31 Sjöbo (SE)
(72) Inventor: Eklund, Conny, 280 70 Lönsboda (SE)
(74) Representative: Wagner, Karl Heinz

(56) References cited:
- EP-A- 0 681 631
- GB-A- 2 153 048
- GB-A- 2 190 466
- US-A- 2 372 726
- US-A- 4 870 992

## Description

The present invention relates to an odour trap which is located in a pipe piece for a drainage, preferably a urinal free from water. The odour trap is made from a yieldably deformable material. The odour trap comprises a substantially tubular member having substantially the same shape and size of the through-flow area as the pipe piece for the drainage, preferably the urinal, and a barrier means which is integrally formed with the tubular member. For closing the through-flow area of the pipe piece in order to prevent fluid, preferably gas, from passing upwards in the pipe piece past the odour trap, the barrier means extends in the flow direction downwards in the pipe piece from a first longitudinal wall portion of the tubular member to an opposite second longitudinal wall portion thereof. The barrier means is also at least partially displaceable by fluid, preferably liquid, flowing into the odour trap, for, to begin with at the lowermost portion of the barrier means in the flow direction, permitting passage of the fluid, preferably the liquid, downwards in the pipe piece past the odour trap and, after passage of the fluid, preferably the liquid, returning to the position closing the through-flow area of the pipe piece.

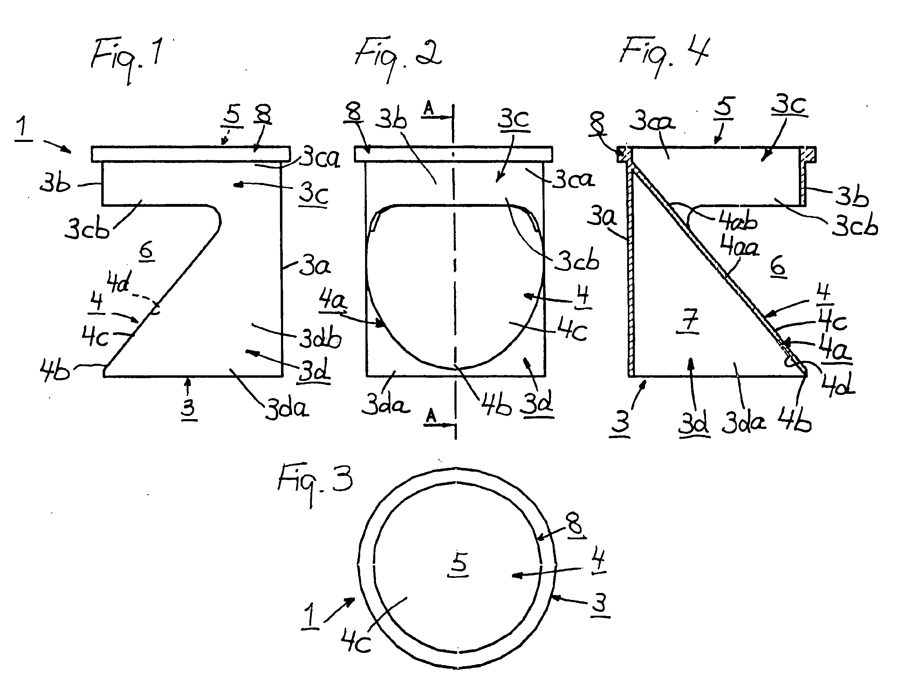

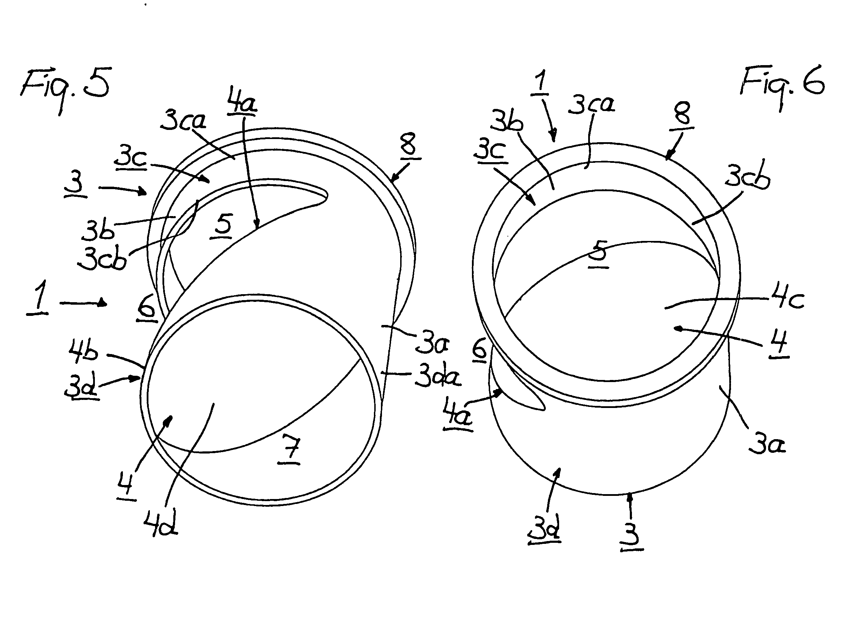

An odour trap as defined above is primarily already known from US 4870992 A. In this publication, two odour trap embodiments having totally different construction and function are described and illustrated, whereby the embodiment of fig. 4 - 8 in principle corresponds to the odour trap defined above. Thus, the odour trap of fig. 4 - 8 comprises, in short, a tubular member with an inlet opening in one end thereof and an outlet opening in the opposite end. A barrier means in the form of a tongue extends obliquely in the tubular member from the inlet opening towards the outlet opening. Portions of the barrier means closing the through--flow area of the tubular member, hang freely movable in the tubular member and are displaceable by fluid flowing into said tubular member.

The odour trap according to the present invention is characterized by the facts that a lateral outlet opening is provided in said opposite second longitudinal wall portion of the tubular member and divides the tubular member into an upper, substantially tubular portion with an inlet opening in an upper end thereof, and a lower, substantially tubular portion, that the barrier means extends in the flow direction downwards in the pipe piece from said first longitudinal wall portion of the tubular member and guides fluid, preferably liquid, from the inlet opening in the upper tubular portion or from a point adjacent said inlet opening to the lateral outlet opening at or adjacent the lower end of the lower tubular portion, that the barrier means is through a peripheral edge integrally formed with the tubular member along its entire circumference, that in the position closing the through-flow area of the pipe piece, the barrier means brings about, with those portions of the peripheral edge which communicate with the lateral outlet opening, a fluid-, preferably gas-tight engagement with the inner side of the pipe piece, and that depending on the flow of fluid, preferably liquid, downwards in the pipe piece past the odour trap, the barrier means and eventually the lower tubular portion is/are to a varying extent displaceable by the fluid, preferably the liquid, in a direction towards said first longitudinal wall portion of the tubular member for passage of the fluid, preferably the liquid, between said portions of the peripheral edge of the barrier means and the inner side of the pipe piece and between the outer side of eventually displaced parts of the lower tubular portion and said inner side of the pipe piece.

Structurally, this odour trap according to the invention differs from the odour trap of US 4870992 A primarily while in said latter odour trap the tubular member has no lateral outlet opening and the barrier means is not connected with the tubular member along its entire circumference. Without these differences, no flow through the prior art odour trap will be permitted via the outlet opening down below in the tubular member. Thus, the prior art barrier means neither guides the flow to the outlet opening in a corresponding manner as the barrier means in the odour trap according to the invention.

Since the prior art barrier means is not connected with the tubular member along its entire circumference, the barrier means lacks the stability provided by the tubular member and therefore, it quickly looses its sealing function. If as in the present invention the barrier means is connected with the tubular member along its entire circumference, also down below, in order to get the required stability and maintained sealing function for a long time, it does not work with a bottom opening as an outlet as at the odour trap according to US 4870992 A, but is according to the invention the outlet opening for the flow through the odour trap provided laterally in the tubular member, whereby the odour trap according to the invention operates as is defined above. A corresponding function can not be attained with the prior art odour trap.

The above and other characterizing features as well as the advantages therewith will be further described below with reference to the accompanying drawings illustrating two preferred embodiments of the invention. In the drawings,
fig. 1 is a side view of the odour trap according to the invention;
fig. 2 is a front view of the odour trap of fig. 1;
fig. 3 is a plan view of the odour trap of fig. 1 and 2;
fig. 4 is a longitudinal section along the line A - A in fig. 2 through the odour trap;
fig. 5 is a perspective view from above of the odour trap according to fig. 1 - 4;
fig. 6 is a perspective view from below of the odour trap according to fig. 1 - 5;
fig. 7 is a longitudinal section through an odour trap of a somewhat modified design and located in a pipe piece for mounting in a drainage, preferably a urinal free from water; and
fig. 8 is a corresponding longitudinal section through the odour trap and pipe piece of fig. 7 after mounting thereof in the drainage, preferably the urinal.

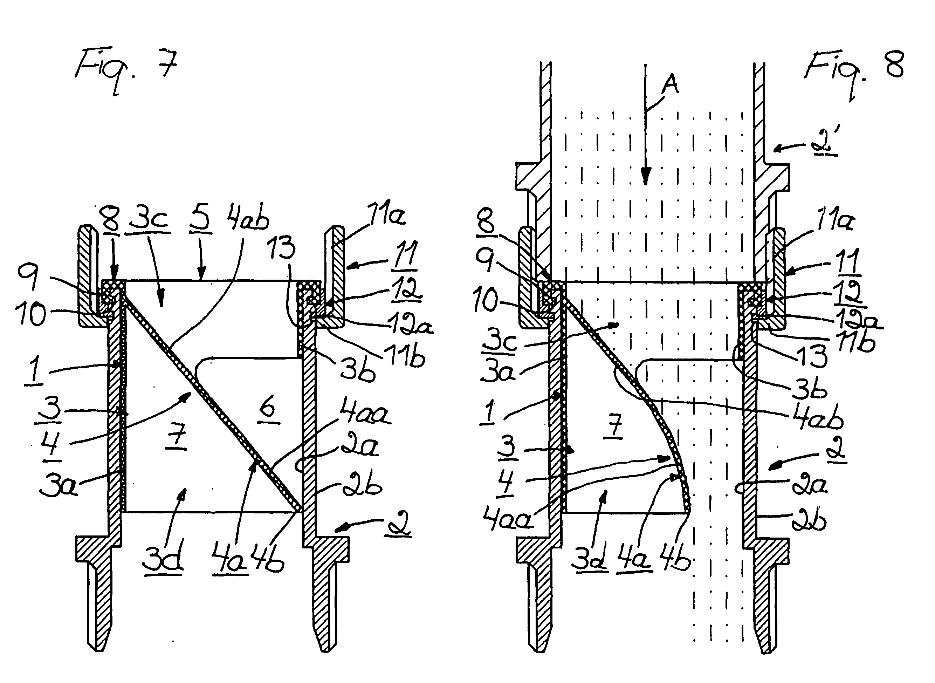

The odour trap 1 according to the invention is adapted for location in a pipe piece 2 (fig. 7 and 8) for a drainage, preferably a urinal free from water. As such, the odour trap 1 is designed in a known manner to hold a first position in which said pipe piece 2 is closed at least fluid-, preferably gas-tight, for preventing fluid, preferably gas, from passing upwards in the pipe piece 2 past the odour trap 1. The odour trap 1 is also displaceable to a second position in which the pipe piece 2 is at least partially open for permitting passage of fluid, preferably liquid such as urine or flushing water with cleaners and/or disinfectants for cleaning and/or disinfection of the drainage, downwards in the pipe piece past the odour trap. Finally, the odour trap 1 is designed such that it always strives to hold said first position and close the pipe piece 2 with a fluid-, preferably gas-tight seal.

According to the preferred embodiments of the odour trap 1 illustrated in the drawings, said odour trap is made from a thin-walled, yieldably deformable material. Thus, the odour trap 1 can be displaced between said first and second positions thanks to its elasticity. The odour trap 1 comprises a substantially tubular member 3 with essentially the same shape and size of the through-flow area as the pipe piece 2, such that the odour trap is located with a good fit in the pipe piece. The odour trap 1 further comprises a barrier means 4 which is integrally formed with the tubular member 3. The barrier means 4 extends in the flow direction A downwards in the pipe piece 2 from a first longitudinal wall portion 3a of the tubular member 3 to an opposite second longitudinal wall portion 3b thereof. In order to close the through-flow area of the pipe piece 2, the barrier means 4 further has a peripheral edge 4a, through which the barrier means is integrally formed with the tubular member 3 along its entire circumference. The barrier means 4 brings namely about, with portions 4aa of the peripheral edge 4a, a fluid-, preferably a gas-tight engagement with the inner side 2a of the tubular member 2. The barrier means 4 is at least partially displaceable by fluid, preferably liquid, flowing into the odour trap 1, for, to begin with at the lowermost portion 4b of the barrier means 4 in the flow direction A, permitting passage of the fluid, preferably the liquid, between said portions 4aa of the peripheral edge 4a of the barrier means and the inner side 2a of the pipe piece 2. After the fluid, preferably the liquid, has passed downwards in the pipe piece 2 past the odour trap 1, the barrier means 4 returns to engagement with the inner side 2a of the pipe piece 2 by means of its peripheral edge 4a or by means of at least those portions 4aa thereof which have been displaced during passage of the fluid, preferably the liquid, past the odour trap 1.

By designing the odour trap 1 with a tubular member 3 as defined above, and with a barrier means 4 integrally formed with said tubular member and having the shape, extension and function as defined above, a well-functioning odour trap with a relatively simple construction is obtained.

Another condition for a well-functioning odour trap 1 is however, according to the invention, that the barrier means 4 extends as defined above between an inlet opening 5 for fluid, preferably liquid, and a lateral outlet opening 6 therefor, in the tubular member 3 of the odour trap 1. The lateral outlet opening 6 is provided in the opposite second longitudinal wall portion 3b of the tubular member 3. The lateral outlet opening 6 divides the tubular member 3 into an upper, substantially tubular portion 3c with an inlet opening 5 in an upper end 3ca thereof, and a lower, substantially tubular portion 3d. Thus, the barrier means 4 extends in the flow direction A downwards in the pipe piece from the first longitudinal wall portion 3a of the tubular member 3 and guides fluid, preferably liquid, from the inlet opening 5 in the upper tubular portion 3c or from a point adjacent said inlet opening to the lateral outlet opening 6 at or adjacent the lower end 3da of the lower tubular portion 3d. Consequently, the barrier means 4 extends as a partition wall or membrane obliquely downwards in the tubular member 3, and the upper side 4c of said barrier means and those portions 4aa of its peripheral edge 4a which communicate with the lateral outlet opening 6 thereby define parts of said lateral outlet opening, while another part of the outlet opening is defined by a lower end 3cb of the upper tubular portion 3c of the tubular member 3. It should be noticed that those portions 4aa of the peripheral edge 4a of the barrier means 4 which contribute in limiting the lateral outlet opening 6 of course also constitute those portions of the barrier means which engage the inner side 2a of the pipe piece 2 and which are displaceable during passage of fluid, preferably liquid, past the odour trap 1. The remaining portions of the peripheral edge 4a of the barrier means 4, i.e. those portions thereof which do not communicate with the lateral outlet opening 6 and do not contribute in limiting said outlet opening, are in fig. 4, 7 and 8 designated with 4ab. The lower side 4d and the peripheral edge 4a of the barrier means 4 define parts of the lower tubular portion 3d of the tubular member 3.

From the above it is obvious that for optimum function, the tubular member 3 of the odour trap 1 may be given any desired length or a length depending on the available space, and the barrier means 4 may be given any suitable inclination between the inlet opening 5 and the lateral outlet opening 6.

The size of the lateral outlet opening 6 however, is of importance for how large portions of and the force by means of which the peripheral edge 4a of the barrier means 4 engages the inner side 2a of the pipe piece 2 and, of course, the flow capacity of the odour trap 1. In particular, the lateral outlet opening 6 extends along 50 - 80 %, preferably about 75 %, of the total length of the tubular member 3.

Depending on the flow of fluid, preferably liquid, downwards in the pipe piece 2 past the odour trap 1, the barrier means 4 and eventually the lower tubular portion 3d of the tubular member 3 is/are, thanks to its/their elasticity, displaceable by the fluid, preferably the liquid, to a varying extent in a direction towards the first longitudinal wall portion 3a of the tubular member 3 (see fig. 8). The greater the flow past the odour trap 1, all the more is the barrier means 4, to begin with at the lowermost portion 4b thereof, and gradually also the lower tubular portion 3d, pressed away from oppositely located portions of the inner side 2a of the pipe piece 2. Consequently, the barrier means 4 and the lower tubular portion 3d of the tubular member 3 are during a strong flow of fluid, preferably liquid, downwards in the pipe piece 2 past the odour trap 1, displaceable by the fluid, preferably the liquid, such that substantially the entire through-flow area of the pipe piece is opened or set free. For optimum displacement and return of said members to the position of engagement with the inner side 2a of the pipe piece 2, such that the desired flow capacity and the desired sealing capacity of the odour trap 1 is obtained, the material for the odour trap 1 and the thickness thereof is selected carefully and naturally in dependence of the size of the odour trap in other respects, i.e. for which type and size of drainage said odour trap is adapted. Since the barrier means 4 during said displacement preferably defines a chute (not shown) extending in the flow direction A of the fluid, preferably the liquid, said fluid, preferably said liquid, is deflected in an advantageous manner and is in a simple manner an adequate displacement of the barrier means permitted for passage of the flow of fluid, preferably liquid.

The lower tubular portion 3d of the tubular member 3 defines, thanks to its shape as a tube, a return means for returning or moving the barrier means 4 back and for ensuring the return thereof into engagement with the inner side 2a of the pipe piece 2. The return force of the return means thereby varies depending on to which extent the barrier means 4 and the lower tubular portion 3d of the tubular member 3 of the odour trap 1 have been displaced by the flow of fluid, preferably liquid, downwards in the pipe piece 2 past the odour trap.

The lower tubular portion 3d of the tubular member 3 and the barrier means 4 which limits the lower tubular portion upwards, also define a nonreturn valve means in the form of a downwardly open space 7. During flow of fluid, preferably liquid, upwards in the pipe piece 2 towards the odour trap 1, the fluid, preferably the liquid, is pressed into the space 7 and thereby, the outer side 3db of the entire lower tubular portion 3d as well as the peripheral edge 4a of the barrier means 4 against the inner side 2a of the pipe piece, such that a sealing is obtained between said sides or surfaces. The greater the flow upwards in the pipe piece 2, the greater sealing force is generated by the flow.

The tubular member 3 of the odour trap 1 is preferably substantially round, since this is a natural construction for connection to conventional round drainages. The round embodiment also provides for an optimum flow during transport of liquid and renders it more difficult for foreign particles to adhere to the surface of the tubular member 3. The round shape is also advantageous for optimizing the sealing capacity and the flow by modifying the thickness of material, diameter and surface structure of the odour trap 1.

When the tubular member 3 is substantially round, the barrier means 4 is substantially oval since it extends obliquely downwards in the tubular member, with the longer axis of the oval extending from the first longitudinal wall portion 3a of the tubular member to the opposite second longitudinal wall portion 3b thereof. This of course for optimum adaptation of the barrier means 4 to the through-flow area of the drainage in which said tubular member 3 has been located with a proper fit.

In the round tubular member 3, the lateral outlet opening 6 is dimensioned such that it extends along 150° - 210°, preferably about 180°, of the periphery of the tubular member at the most, since this will provide for an excellent flow capacity to the odour trap 1 while at the same time the barrier means 4 does not become rigid enough to counteract the deformation/displacement thereof necessary for the function. Since the barrier means 4 is oval and extends obliquely downwards in the tubular member 3, the extension of the lateral outlet opening 6 along the periphery of the tubular member diminishes in downward direction towards the lowermost portion 4b of the barrier means, which is clearly apparent from fig. 2, 5 and 6.

The odour trap 1 is provided with at least one mounting means 8 for releasable mounting of the odour trap in the pipe piece 2 for the drainage, preferably the urinal. The odour trap 1 is thereby exchangeable because of wear or damages without simultaneously having to disassemble the pipe piece 2 and replace it with a new pipe piece 2 having a new odour trap.

In order to have as simple a construction as possible, the mounting means 8 is preferably integrally formed with the odour trap 1. At the preferred illustrated embodiments of the odour trap 1, the mounting means 8 is preferably a mounting and sealing flange provided on and running around the tubular member 3 at or adjacent the inlet opening 5 thereto, i.e. at or adjacent the upper end 3ca of the upper tubular portion 3c of the tubular member 3. Thus, the mounting means 8 here also serves as a gasket for upper connections, e.g. a bottom valve in the drainage system, preferably the waterfree urinal. Since the mounting means 8 protrudes radially beyond the outer side of the tubular member 3, it defines an overhang by means of which said tubular member can be "hung" on the edge of the pipe piece 2 during insertion thereof into said pipe piece.

In fig. 7 and 8, a somewhat modified mounting means 8 is illustrated.

The mounting means 8 has here been given a somewhat less thickness of material but instead been elongated and angled to form a tongue 9 which has been inserted into a groove 10 on the outer side 2b of the pipe piece 2 for secure attachment of the odour trap 1 to the pipe piece.

After mounting of the odour trap 1 in the pipe piece 2 (fig. 7), the pipe piece can be connected with the end provided with the odour trap to another pipe piece 2' for the drainage, preferably the urinal, by means of e.g. a mounting ring 11 which, preferably through a threaded portion 11a, is brought in threading engagement with said other pipe piece 2' and which moreover, through an engagement portion 11b, cooperates with a lock member 12 which is provided radially outwards of the mounting means 8 and having a portion 12a thereof protruding into a second groove 13 on the outer side 2b of the pipe piece 2 for, after assembly of the pipe pieces 2, 2', inter alia, fixing the mounting ring 11 axially and see to that the mounting means is clamped between the pipe pieces and by the lock member respectively (fig. 8).

With an odour trap having a total length of about 46 mm and an internal diameter of about 34 mm, the mounting means 8 has a thickness of material of between 1,5 and 4,5 mm, at the illustrated preferred embodiment according to fig. 1 - - 6 preferably a thickness of material of about 3 mm and at the illustrated preferred embodiment according to fig. 7 and 8 preferably about 2 mm, and the remaining components of the odour trap 1, i.e. the tubular member 3 and the barrier means 4, a thickness of between 0,5 and 1,5 mm, preferably about 1 mm. By selecting the thickness of material as above, optimum resilience or elasticity is obtained in those portions of the odour trap 1 which engage the inner side 2a of the pipe piece 2 and thereby, optimum flow. Also, optimum thickness of e.g. the peripheral edge 4a of the barrier means 4 is hereby obtained, which as one among several factors contributes in providing optimum resistance against deformation/displacement for passing through fluid, preferably liquid, such that a suitable balance is reached between the flow in direction A downwards in the pipe piece 2 and the sealing for preventing the flow of fluid, preferably liquid, upwards in the pipe piece.

Another essential factor for reaching said balance is the selection of material for the odour trap. Suitable materials are e.g. natural rubber or any thermoplastic elastomer. The preferred material however, is nitrile rubber and most preferably chlorinated nitrile rubber for providing as small a friction as possible such that also the last drop of liquid can disappear capillary between the peripheral edge 4a of the barrier means 4 and the inner side 2a of the pipe piece 2 for the drainage, preferably the urinal.

It is obvious to a skilled person that the odour trap according to the present invention may be modified and vary within the scope of the subsequent claims without departing from the idea and purpose of the invention. Thus, the tubular member 3 of the odour trap 1 may e.g. have another shape than round and another through-flow area than round and consequently, the barrier means 4 another shape than oval. The length of the tubular member 3 may also, as noticed above, vary as desired or required. In principal, the length does not need to be greater than that the mounting of the odour trap 1 remains simple and quick by insertion thereof into the intended pipe piece 2 with the required fit and sealing against the inner side 2a of the pipe piece and/or suspension thereof as shown in the intended pipe piece by means of the mounting means 8. At the tubular member 3, the inlet and outlet openings 5 and 6 respectively, may also vary in size beyond what is stated above, as may the inclination of the barrier means 4. The upper and lower tubular portions 3c, 3d of the tubular member 3 may vary in size relative to each other, as of course their actual size and their size relative to the lateral outlet opening 6 and to the tubular member in its entirety.

## Claims

1. Odour trap, which is adapted for location in a pipe piece (2) for a drainage, preferably a urinal free from water, wherein the odour trap (1) is made from a yieldably deformable material,
wherein the odour trap (1) comprises a substantially tubular member (3) having substantially the same shape and size of the through-flow area as the pipe piece (2) for the drainage, preferably the urinal, and a barrier means (4) which is integrally formed with the tubular member,
wherein, after location of the odour trap (1) in the pipe piece (2) for closing the through-flow area of the pipe piece in order to prevent fluid, preferably gas, from passing upwards in the pipe piece past the odour trap, the barrier means (4) extends in the flow direction (A) downwards in the pipe piece from a first longitudinal wall portion (3a) of the tubular member (3) to an opposite second longitudinal wall portion (3b) thereof, and
wherein the barrier means (4) is at least partially displaceable by fluid, preferably liquid, flowing into the odour trap (1), for, to begin with at the lowermost portion (4b) of the barrier means in the flow direction (A), permitting passage of the fluid, preferably the liquid, downwards in the pipe piece (2) past the odour trap and, after passage of the fluid, preferably the liquid, returning to the position closing the through-flow area of the pipe piece,
**characterized in**
**that** a lateral outlet opening (6) is provided in said opposite second longitudinal wall portion (3b) of the tubular member (3) and divides the tubular member into an upper, substantially tubular portion (3c) with an inlet opening (5) in an upper end (3ca) thereof, and a lower, substantially tubular portion (3d),
**that** the barrier means (4) extends in the flow direction (A) downwards in the pipe piece (2) from said first longitudinal wall portion (3a) of the tubular member (3) and guides fluid, preferably liquid, from the inlet opening (5) in the upper tubular portion (3c) or from a point adjacent said inlet opening to the lateral outlet opening (6) at or adjacent the lower end (3da) of the lower tubular portion (3d),
**that** the barrier means (4) is through a peripheral edge (4a) integrally formed with the tubular member (3) along its entire circumference,
**that** in the position closing the through-flow area of the pipe piece (2), the barrier means (4) brings about, with those portions (4aa) of the peripheral edge (4a) which communicate with the lateral outlet opening (6), a fluid-, preferably gas-tight engagement with the inner side (2a) of the pipe piece, and
**that** depending on the flow of fluid, preferably liquid, downwards in the pipe piece (2) past the odour trap (1), the barrier means (4) and eventually the lower tubular portion (3d) is/are to a varying extent displaceable by the fluid, preferably the liquid, in a direction towards said first longitudinal wall portion (3a) of the tubular member (3) for passage of the fluid, preferably the liquid, between said portions (4aa) of the peripheral edge (4a) of the barrier means and the inner side (2a) of the pipe piece (2) and between the outer side of eventually displaced parts of the lower tubular portion and said inner side of the pipe piece.

2. Odour trap according to claim 1, **characterized in that** the lateral outlet opening (6) extends along 50 - 80 %, preferably about 75 %, of the length of the tubular member (3).

3. Odour trap according to claim 1 or 2, **characterized in that** the barrier means (4) and the lower tubular portion (3d) of the tubular member (3) are displaceable by the fluid, preferably the liquid, in a direction towards the first longitudinal wall portion (3a) of the tubular member, such that substantially the entire through-flow area of the pipe piece (2) is opened or set free.

4. Odour trap according to any of claims 1 - 3, **characterized in that** the barrier means (4) defines, during displacement thereof in dependence of the flow of fluid, preferably liquid, downwards in the pipe piece (2) past the odour trap (1), a chute extending in the direction of flow of said fluid, preferably liquid.

5. Odour trap according to any of claims 1 - 4, **characterized in that** the lower tubular portion (3d) defines a return means for returning the barrier means (4) into engagement with the inner side (2a) of the pipe piece (2), whereby the return force of the return means varies depending on to which extent the barrier means and the lower tubular portion have been displaced by the flow of fluid, preferably liquid, downwards in the pipe piece past the odour trap (1).

6. Odour trap according to any of claims 1 - 5, **characterized in that** lower tubular portion (3d) of the tubular member (3) and the barrier means (4) define a nonreturn valve means in the form of a downwardly open space (7), which during flow of fluid, preferably liquid, upwards in the pipe piece (2) is pressed against the inner side (2a) of the pipe piece by said flow.

7. Odour trap according to any of claims 1 - 6, **characterized in that** the tubular member (3) is substantially round and the barrier means (4) substantially oval with the longer axis of the oval extending obliquely downwards in the tubular member, from the first longitudinal wall portion (3a) of the tubular member to the opposite second longitudinal wall portion (3b) thereof.

8. Odour trap according to claim 7, **characterized in that** the lateral outlet opening (6) extends along 150° - 210°, preferably about 180°, of the periphery of the tubular member (3) at the most and that this extension along the periphery of the tubular member diminishes in downward direction towards the lowermost portion (4b) of the barrier means (4).

9. Odour trap according to any of claims 1 - 8, **characterized in that** said odour trap (1) has at least one mounting means (8) for releasable mounting thereof in the pipe piece (2) for the drainage, preferably the urinal.

10. Odour trap according to claim 9, **characterized in that** the mounting means (8) is integrally formed with the odour trap (1).

11. Odour trap according to claim 10, **characterized in that** the mounting means (8), prerferably a mounting and sealing flange, is provided on the tubular member (3) at or adjacent the inlet opening (5) thereto.

12. Odour trap according to claim 11, **characterized in that** the mounting means (8) is provided with an angled extension (9) for insertion into a groove (10) on the outer side (2b) of the pipe piece (2) for the drainage, preferably the urinal, for secure attachment of the odour trap (1) to the pipe piece.

13. Odour trap according to any of claims 9 - 12, **characterized in that** the thickness of material of the mounting means (8) is between 1,5 and 4,5 mm, preferably between 2 and 3 mm.

14. Odour trap according to any of claims 1 - 13, **characterized in that** the thickness of material of said odour trap (1) is between 0,5 and 1,5 mm, preferably about 1 mm.

15. Odour trap according to any of claims 1 - 14, **characterized in that** said odour trap (1) is made from natural rubber.

16. Odour trap according to any of claims 1 - 14, **characterized in that** said odour trap (1) is made from nitrile rubber, preferably chlorinated nitrile rubber.

17. Odour trap,according to any of claims 1 - 14, **characterized in that** said odour trap (1) is made from a thermoplastic elastomer.

## Patentansprüche

1. Geruchsverschluss, geeignet zur Anbringung in einem Rohrstück (2) für einen Abfluss, vorzugsweise ein wasserfreies Urinal, bei dem der Geruchsverschluss (1) aus einem nachgiebigen verformbaren Material gefertigt ist,
bei dem der Geruchsverschluss (1) ein im Wesentlichen röhrenförmiges Element (3), dessen Durchflussbereich im Wesentlichen dieselbe Form und Größe hat wie das Rohrstück (2) für den Abfluss, vorzugsweise das Urinal, sowie ein einstückig mit dem röhrenförmigen Element geformtes Barrieremittel (4) umfasst,
bei dem sich nach Anbringung des Geruchsverschlusses (1) im Rohrstück (2) zum Verschließen des Durchflussbereiches des Rohrstücks, um zu verhindern, dass ein Fluid, vorzugsweise ein Gas, über den Geruchsverschluss hinaus im Rohrstück nach oben strömt, das Barrieremittel (4) von einem ersten längs verlaufenden Wandabschnitt (3a) des röhrenförmigen Elements (3) zu einem gegenüberliegenden zweiten längs verlaufenden Wandabschnitt (3b) desselben in Flussrichtung (A) im Rohrstück abwärts erstreckt, und
bei dem das Barrieremittel (4) zumindest teilweise verschiebbar ist durch ein Fluid, vorzugsweise eine Flüssigkeit, die in den Geruchsverschluss (1) fließt, um ab dem in Flussrichtung (A) untersten Abschnitt (4b) des Barrieremittels zu ermöglichen, dass das Fluid, vorzugsweise die Flüssigkeit, im Rohrstück (2) über den Geruchsverschluss hinaus abwärts strömt und nach Durchströmen des Fluids, vorzugsweise der Flüssigkeit, in die den Durchflussbereich des Rohrstücks verschließende Stellung zurückkehrt,
**dadurch gekennzeichnet,**
**dass** in dem gegenüberliegenden zweiten längs verlaufenden Wandabschnitt (3b) des röhrenförmigen Elements (3) eine seitliche Auslassöffnung (6) vorgesehen ist, die das röhrenförmige Element in einen oberen, im Wesentlichen röhrenförmigen Abschnitt (3c) mit einer Einlassöffnung (5) in dessen oberem Ende (3ca) und einen unteren, im Wesentlichen röhrenförmigen Abschnitt (3d) unterteilt,
**dass** sich das Barrieremittel (4) vom ersten längs verlaufenden Wandabschnitt (3a) des röhrenförmigen Abschnitts (3) im Rohrstück (2) in Flussrichtung (A) abwärts erstreckt und ein Fluid, vorzugsweise eine Flüssigkeit, von der Einlassöffnung (5) im oberen röhrenförmigen Abschnitt (3c) oder von einer an diese Einlassöffnung angrenzenden Stelle zur seitlichen Auslassöffnung (6) an oder neben dem unteren Ende (3da) des unteren röhrenförmigen Abschnitts (3d) leitet,
**dass** das Barrieremittel (4) durch eine Umfangskante (4a) entlang seines gesamten Umfangs einstückig mit dem röhrenförmigen Element (3) geformt ist,
**dass** das Barrieremittel (4) in der den Durchflussbereich des Rohrstücks (2) verschließenden Stellung mit denjenigen Abschnitten (4aa) der Umfangskante (4a), welche mit der seitlichen Auslassöffnung (6) kommunizieren, einen fluid-, vorzugsweise gas-dichten Abschluss mit der Innenseite (2a) des Rohrstücks bewirkt, und
**dass** abhängig vom Fluss des Fluids, vorzugsweise der Flüssigkeit, im Rohrstück (2) abwärts über den Geruchsverschluss (1) hinaus das Barrieremittel (4) und eventuell der untere röhrenförmige Abschnitt (3d) in variierendem Ausmaß durch das Fluid, vorzugsweise die Flüssigkeit, in Richtung auf den ersten längs verlaufenden Wandabschnitt (3a) des röhrenförmigen Elements (3) verschiebbar ist/sind, damit das Fluid, vorzugsweise die Flüssigkeit, zwischen diesen Abschnitten (4aa) der Umfangskante (4a) des Barrieremittels und der Innenseite (2a) des Rohrstücks (2) und zwischen der Außenseite eventuell verschobener Teile des unteren röhrenförmigen Abschnitts und der Innenseite des Rohrstücks hindurchströmen kann.

2. Geruchsverschluss nach Anspruch 1,
**dadurch gekennzeichnet, dass** sich die seitliche Auslassöffnung (6) über 50 - 80 %, vorzugsweise ca. 75 %, der Länge des röhrenförmigen Elements (3) erstreckt.

3. Geruchsverschluss nach Anspruch 1 oder 2,
**dadurch gekennzeichnet, dass** das Barrieremittel (4) und der untere röhrenförmige Abschnitt (3d) des röhrenförmigen Elements (3) durch das Fluid, vorzugsweise die Flüssigkeit, in Richtung auf den ersten längs verlaufenden Wandabschnitt (3a) des röhrenförmigen Elements verschiebbar sind, so dass im Wesentlichen der gesamte Durchflussbereich des Rohrstücks (2) geöffnet oder freigegeben wird.

4. Geruchsverschluss nach einem der Ansprüche 1 bis 3,
**dadurch gekennzeichnet, dass** das Barrieremittel (4) während seiner Verschiebung abhängig vom Fluss des Fluids, vorzugsweise der Flüssigkeit, im Rohrstück (2) abwärts über den Geruchsverschluss (1) hinaus eine in Richtung des Flusses des Fluids, vorzugsweise der Flüssigkeit, verlaufende Rinne definiert.

5. Geruchsverschluss nach einem der Ansprüche 1 bis 4,
**dadurch gekennzeichnet, dass** der untere röhrenförmige Abschnitt (3d) ein Rücksetzmittel zum Zurücksetzen des Barrieremittels (4) zum Abschluss mit der Innenseite (2a) des Rohrstücks (2) definiert, wobei die Rücksetzkraft des Rücksetzmittels variiert, je nachdem, in welchem Ausmaß das Barrieremittel und der untere röhrenförmige Abschnitt durch den Fluss des Fluids, vorzugsweise der Flüssigkeit, im Rohrstück abwärts über den Geruchsverschluss (1) hinaus verschoben wurden.

6. Geruchsverschluss nach einem der Ansprüche 1 bis 5,
**dadurch gekennzeichnet, dass** der untere röhrenförmige Abschnitt (3d) des röhrenförmigen Elements (3) und das Barrieremittel (4) ein Rückflusssperrmittel in Form eines nach unten offenen Raumes definieren, das während des Flusses des Fluids, vorzugsweise der Flüssigkeit, im Rohrstück (2) aufwärts durch diesen Fluss gegen die Innenseite (2a) des Rohrstücks gedrückt wird.

7. Geruchsverschluss nach einem der Ansprüche 1 bis 6,
**dadurch gekennzeichnet, dass** das röhrenförmige Element (3) im Wesentlichen rund ist und das Barrieremittel (4) im Wesentlichen oval ist, wobei sich die längere Achse des Ovals vom ersten längs verlaufenden Wandabschnitt (3a) des röhrenförmigen Elements (3) zu dem diesem gegenüberliegenden zweiten längs verlaufenden Wandabschnitt (3b) schräg nach unten im röhrenförmigen Element erstreckt.

8. Geruchsverschluss nach Anspruch 7,
**dadurch gekennzeichnet, dass** sich die seitliche Auslassöffnung (6) über höchstens 150° - 210°, vorzugsweise über ca. 180°, des Umfangs des röhrenförmigen Elements (3) erstreckt und dass diese Erstreckung entlang des Umfangs des röhrenförmigen Elements nach unten in Richtung auf den untersten Abschnitt (4b) des Barrieremittels (4) abnimmt.

9. Geruchsverschluss nach einem der Ansprüche 1 bis 8,
**dadurch gekennzeichnet, dass** der Geruchsverschluss (1) zumindest ein Einbaumittel (8) zu seinem lösbaren Einbau in das Rohrstück (2) für den Ablauf, vorzugsweise das Urinal, aufweist.

10. Geruchsverschluss nach Anspruch 9,
**dadurch gekennzeichnet, dass** das Einbaumittel (8) einstückig mit dem Geruchsverschluss (1) geformt ist.

11. Geruchsverschluss nach Anspruch 10,
**dadurch gekennzeichnet, dass** das Einbaumittel (8), vorzugsweise ein Einbau- und Dichtflansch, auf dem röhrenförmigen Element (3) an oder neben dessen Einlassöffnung (5) vorgesehen ist.

12. Geruchsverschluss nach Anspruch 11,
**dadurch gekennzeichnet, dass** das Einbaumittel (8) mit einer winkeligen Verlängerung (9) zum Einsatz in eine Nut (10) auf der Außenseite (2b) des Rohrstücks (2) für den Ablauf, vorzugsweise das Urinal, zur sicheren Anbringung des Geruchsverschlusses (1) am Rohrstück versehen ist.

13. Geruchsverschluss nach einem der Ansprüche 9 bis 12,
**dadurch gekennzeichnet, dass** die Dicke des Materials des Einbaumittels (8) zwischen 1,5 und 4,5 mm, vorzugsweise zwischen 2 und 3 mm beträgt.

14. Geruchsverschluss nach einem der Ansprüche 1 bis 13,
**dadurch gekennzeichnet, dass** die Dicke des Materials des Geruchsverschlusses (1) zwischen 0,5 und 1,5 mm, vorzugsweise ca. 1 mm beträgt.

15. Geruchsverschluss nach einem der Ansprüche 1 bis 14,
**dadurch gekennzeichnet, dass** der Geruchsverschluss (1) aus Naturgummi gefertigt ist.

16. Geruchsverschluss nach einem der Ansprüche 1 bis 14,
**dadurch gekennzeichnet, dass** der Geruchsverschluss (1) aus Nitrilgummi, vorzugsweise chloriertem Nitrilgummi, gefertigt ist.

17. Geruchsverschluss nach einem der Ansprüche 1 bis 14,
**dadurch gekennzeichnet, dass** der Geruchsverschluss (1) aus einem thermoplastischen Elastomer gefertigt ist.

## Revendications

1. Collecteur d'odeur qui est conçu pour venir se disposer dans un tronçon de tuyau (2) destiné à une vidange, de préférence dans un urinoir en l'absence d'eau, dans lequel le collecteur d'odeur (1) est constitué d'une matière élastiquement déformable,
dans lequel le collecteur d'odeur (1) comprend un membre essentiellement tubulaire (3) possédant essentiellement la même configuration et la même dimension de la zone d'écoulement que celles du tronçon de tuyau (2) pour la vidange, de préférence de l'urinoir, et un moyen d'arrêt (4) qui est réalisé en une seule pièce avec le membre tubulaire ;
dans lequel, après l'endroit où est situé le collecteur d'odeur (1) dans le tronçon de tuyau (2), pour la fermeture de la zone d'écoulement du tronçon de tuyau dans le but d'empêcher du fluide, de préférence du gaz, de remonter dans le tronçon de tuyau au-delà du collecteur d'odeur, le moyen d'arrêt (4) s'étendant dansla direction d'écoulement (A) vers le bas dans le tronçon de tuyau depuis une première portion de paroi longitudinale (3a) du membre tubulaire (3) jusqu'à une deuxième portion longitudinale opposée (3b) du dernier cité ; et
dans lequel le moyen d'arrêt (4) peut être déplacé au moins en partie par du fluide, de préférence du liquide, s'écoulant dans le collecteur d'odeur (1), afin de, en commençant à la portion la plus basse (4a) du moyen d'arrêt dans la direction d'écoulement (A), permettre le passage du fluide, de préférence du liquide, vers le bas dans le tronçon de tuyau (2) au-delà du collecteur d'odeur et, après le passage du fluide, de préférence du liquide, reprendre sa position de fermeture de la zone d'écoulement du tronçon de tuyau,
**caractérisé**
**en ce qu'**une ouverture de sortie latérale (6) est prévue dans ladite deuxième portion de paroi longitudinale opposée (3b) du membre tubulaire (3), qui subdivise le membre tubulaire en une portion supérieure essentiellement tubulaire (3c) comportant une ouverture d'entrée (5) dans son extrémité supérieure (3ca) et une portion inférieure essentiellement tubulaire (3d) ;
**en ce que** le moyen d'arrêt (4) s'étend dans la direction d'écoulement (A) vers le bas dans le tronçon de tuyau (2) à partir de ladite première portion de paroi longitudinale (3a) du membre tubulaire (3) et guide du fluide, de préférence du liquide, depuis l'ouverture d'entrée (5) dans la portion tubulaire supérieure (3c) ou à partir d'un endroit adjacent à ladite ouverture d'entrée en direction de l'ouverture de sortie latérale (6) à l'extrémité inférieure (3da) de la portion tubulaire inférieure (3d) ou en position adjacente à ladite extrémité ;
**en ce que** le moyen d'arrêt (4) est réalisé, via un bord périphérique (4), en une seule pièce avec le membre tubulaire (3) sur toute sa circonférence,
**en ce que**, dans la position de fermeture de la zone d'écoulement du tronçon de tuyau (2), le moyen d'arrêt (4) met en oeuvre, avec les portions (4aa) du bord périphérique (4a) qui communiquent avec l'ouverture de sortie latérale (6), un contact étanche aux fluides, de préférence étanche aux gaz avec le côté interne (2a) du tronçon de tuyau ; et
**en ce que**, en fonction de l'écoulement de fluide, de préférence de liquide, vers le bas dans le tronçon de tuyau (2) au-delà du collecteur d'odeur (1), le moyen d'arrêt (4) et, au bout du compte, la portion tubulaire inférieure (3d), est/sont à même de se déplacer sur une étendue variable sous l'influence du fluide, de préférence du liquide, dans une direction s'étendant vers ladite première portion de paroi longitudinale (3a) du membre tubulaire (3) pour le passage du fluide, de préférence du liquide, entre lesdites portions (4aa) du bord périphérique (4a) du moyen d'arrêt et le côté interne (2a) du tronçon de tuyau (2), et entre le côté externe des parties, qui se sont finalement déplacées, de la portion tubulaire inférieure et dudit côté interne du tronçon de tuyau.

2. Collecteur d'odeur selon la revendication 1, **caractérisé en ce que** l'ouverture de sortie latérale (6) s'étend sur une distance qui représente de 50 à 80 %, de préférence d'environ 75 % de la longueur du membre tubulaire (3).

3. Collecteur d'odeur selon revendication 1 ou 2, **caractérisé en ce que** le moyen d'arrêt (4) et la portion tubulaire inférieure (3d) du membre tubulaire (3) sont à même de se déplacer sous l'influence du fluide, de préférence du liquide, dans une direction s'étendant vers la première portion de paroi longitudinale (3) du membre tubulaire, de telle sorte que essentiellement la totalité de la zone d'écoulement du tronçon de tuyau (2) est ouverte ou laissée libre.

4. Collecteur d'odeur selon l'une quelconque des revendications 1 à 3, **caractérisé en ce que** le moyen d'arrêt (4) définit, au cours de son déplacement, en fonction de l'écoulement de fluide, de préférence de liquide, vers le bas dans le tronçon de tuyau (2) au-delà du collecteur d'odeur (1), un conduit d'éjection dans la direction d'écoulement dudit fluide, de préférence du liquide.

5. Collecteur d'odeur selon l'une quelconque revendication 1 à 4, **caractérisé en ce que** la portion tubulaire inférieure (3d) définit un moyen de retour pour remettre le moyen d'arrêt (4) en contact avec le côté interne (2a) du tronçon de tuyau (2), la force de retour du moyen de retour variant en fonction de l'étendue du déplacement du moyen d'arrêt et de la portion tubulaire inférieure sous l'influence de l'écoulement de fluide, de préférence de liquide, vers le bas dans le tronçon de tuyau au-delà du collecteur d'odeur (1).

6. Collecteur d'odeur selon l'une quelconque des revendications 1 à 5, **caractérisé en ce que** la portion tubulaire inférieure (3d) du membre tubulaire (3) et le moyen d'arrêt (4) définissent un moyen de soupape de non-retour sous la forme d'un espace (7) ouvert vers le bas qui, lors de l'écoulement de fluide, de préférence de liquide, vers le haut dans le tronçon de tuyau (2), est comprimé contre le côté interne (2a) du tronçon de tuyau par ledit écoulement.

7. Collecteur d'odeur selon l'une quelconque des revendications 1 à 6, **caractérisé en ce que** le membre tubulaire (3) est essentiellement de forme ronde et le moyen d'arrêt (4) est essentiellement de forme ovale, le grand axe de l'ovale s'étendant en oblique vers le bas dans le membre tubulaire, depuis la première portion de paroi longitudinale (3a) du membre tubulaire jusqu'à la deuxième portion de paroi longitudinale opposée (3b) du dernier cité.

8. Collecteur d'odeur selon la revendication 7, **caractérisé en ce que** l'ouverture de sortie latérale (6) s'étend en formant un angle de 150° à 210°, de préférence en formant un angle d'environ 180°, de la périphérie du membre tubulaire (3) au maximum, et **en ce que** cette étendue sur la périphérie du membre tubulaire diminue dans la direction descendante vers la portion la plus basse (4b) du moyen d'arrêt (4).

9. Collecteur d'odeur selon l'une quelconque des revendications 1 à 8, **caractérisé en ce que** ledit collecteur d'odeur (1) possède au moins un moyen de montage (8) pour son montage amovible dans le tronçon de tuyau (2) pour la vidange, de préférence dans l'urinoir.

10. Collecteur d'odeur selon la revendication 9, **caractérisé en ce que** le moyen de montage (8) est réalisé en une seule pièce avec le collecteur d'odeur (1).

11. Collecteur d'odeur selon la revendication 10, **caractérisé en ce que** le moyen de montage (8), de préférence une bride de montage et d'étanchéité, est prévu sur le membre tubulaire (3) à l'ouverture d'entrée (5) de ce dernier ou en position adjacente à ladite ouverture.

12. Collecteur d'odeur selon la revendication 11, **caractérisé en ce que** le moyen de montage (8) est prévu avec une étendue angulaire (9) à des fins d'insertion dans une rainure (10) sur le côté externe (2b) du tronçon de tuyau (2) pour la vidange, de préférence de l'urinoir, pour fixer fermement le collecteur d'odeur (1) au tronçon de tuyau.

13. Collecteur d'odeur selon l'une quelconque des revendications 9 à 12, **caractérisé en ce que** l'épaisseur de la matière du moyen de montage (8) se situe entre 1,5 et 4,5 mm, de préférence entre 2 et 3 mm.

14. Collecteur d'odeur selon l'une quelconque des revendications 1 à 13, **caractérisé en ce que** l'épaisseur de la matière dudit collecteur d'odeur (1) se situe entre 0,5 et 1,5 mm, de préférence s'élève à environ 1 mm.

15. Collecteur d'odeur selon l'une quelconque des revendications 1 à 14, **caractérisé en ce que** ledit collecteur d'odeur (1) est constitué de caoutchouc naturel.

16. Collecteur d'odeur selon l'une quelconque des revendications 1 à 14, **caractérisé en ce que** ledit collecteur d'odeur (1) est constitué de caoutchouc nitrile, de préférence de caoutchouc nitrile chloré.

17. Collecteur d'odeur selon l'une quelconque des revendications 1 à 14, **caractérisé en ce que** ledit collecteur d'odeur (1) est constitué d'un élastomère thermoplastique.
